# EUROPEAN PATENT APPLICATION

(11) **EP 4 836 140 A1**
(43) Date of publication of application: **04.11.2026**
(21) Application number: 24913092.3
(22) Date of filing: 27.12.2024
(51) Int. Cl.: H01M 50/262, H01M 10/052, H01M 10/0585, H01M 50/105, H01M 50/211, H01M 50/227, H01M 50/249, H01M 50/284, H01M 50/519, H01M 50/569

(54) **BATTERY SYSTEM AND FLYING VEHICLE**

(30) Priority: 28.12.2023 JP 2023223640
(71) Applicant: Softbank Corp., Tokyo 105-7529 (JP)
(72) Inventor: SAITO Takaya, Tokyo 105-7529 (JP); TAKAYANAGI Yoshiki, Tokyo 105-7529 (JP); FUKUCHI Svetlana, Tokyo 105-7529 (JP); KITAZUME Hiroko, Tokyo 105-7529 (JP); ENOMOTO Miki, Tokyo 112-0003 (JP); YAMAMOTO Ryoichi, Tokyo 112-0003 (JP)
(74) Representative: Dilg, Haeusler, Schindelmann Patentanwaltsgesellschaft mbH
(86) International application number: PCT/JP2024/046358
(87) International publication number: WO 2025/143206

(57) **Abstract**

A battery system is provided that includes a battery pack whose thickness changes due to charging and discharging, and a restraining member that restrains the battery pack and has a configuration in which, when a pressure applied to the battery pack by the restraining member exceeds a predetermined pressure due to a change in thickness of the battery pack caused by charging and discharging, the restraining member breaks and restraint of the battery pack is released. The restraining member may restrain the battery pack via two plate-shaped members that sandwich the battery pack along a direction of the thickness.

## Description

### TECHNICAL FIELD

The present invention relates to a battery system and a flight vehicle.

### BACKGROUND ART

Patent Document 1 describes that, in a lithium-ion battery, a plurality of stacked battery cells are sandwiched by metal plates and the metal plates are restrained using a metal band, thereby applying a restraining pressure in a stacking direction to the battery cells.

### RELATED ART DOCUMENTS

### PATENT DOCUMENTS

Patent Document 1: Japanese patent application publication 2022-075152.

### GENERAL DISCLOSURE

### SOLUTION TO PROBLEM

According to one embodiment of the present invention, a battery system is provided. The battery system may include the battery pack whose thickness changes due to charging and discharging. The battery system may include a restraining member that restrains the battery pack. The restraining member may have a configuration in which, when a pressure applied to the battery pack by the restraining member due to a change in thickness caused by charging and discharging of the battery pack exceeds a predetermined pressure, the restraining member breaks and restraint of the battery pack is released.

In the battery system, the restraining member may restrain the battery pack via the two plate-shaped members that sandwich the battery pack along a direction of the thickness. In the battery system, the restraining member may directly restrain the battery pack. In any of the battery systems, a material of at least any of the two plate-shaped members may include reinforced plastic.

In any of the battery systems, the restraining member may be annular. The restraining member may be torn when the pressure applied to the battery pack by the restraining member exceeds the predetermined pressure. The battery pack may be a lithium metal battery. A material of the restraining member may be organic fiber. The restraining member may be a band made of aramid fiber.

In any of the battery systems, the restraining member may include a band portion that is wound around the battery pack and a fixing portion that fixes different positions of the band portion to each other. The restraining member may have a configuration in which fixing by the fixing portion is released when the pressure applied to the battery pack by the restraining member exceeds the predetermined pressure. The fixing portion may include a coupling portion, and the coupling portion may be made of a material different from that of another portion of the fixing portion and having lower strength than the material of the another portion of the fixing portion. In the coupling portion, a cross-sectional area of a cross section of the fixing portion intersecting a circumferential direction of the restraining member may be formed smaller than that of the another portion of the fixing portion.

In any of the battery systems, the battery pack may have a characteristic in which performance improves as applied pressure increases up to a first pressure and performance decreases when a pressure stronger than the first pressure is applied. The predetermined pressure may be a pressure determined based on the first pressure. The predetermined pressure may be a pressure obtained by multiplying the first pressure by a predetermined ratio greater than 1.

In any of the battery systems, the battery pack may include a battery cell. The battery cell may include a plurality of positive electrodes, a plurality of negative electrodes, and a plurality of separators that are alternately stacked. The battery cell may include a bag-shaped member enclosing the plurality of positive electrodes, the plurality of negative electrodes, and the plurality of separators. The bag-shaped member may have a size that enables stacking of the plurality of positive electrodes, the plurality of negative electrodes, and the plurality of separators to be released and to be separated from each other after the restraining member breaks and restraint of the battery pack is released due to the pressure applied to the battery pack by the restraining member exceeding the predetermined pressure as a result of a change in thickness caused by charging and discharging of the battery pack. The bag-shaped member may have a pouch structure made of an aluminum laminate.

In any of the battery systems described above, the battery pack may have a plurality of units arranged side by side in the thickness direction. Each of the plurality of units may include a plurality of battery cells including the battery cell. The battery system may include a BMS (buttery management system) unit. The battery system may include FPC (Flexible printed circuits) connected to the BMS unit. Each of the plurality of units may be connected to the FPC. The FPC may have a configuration in which, when the pressure applied to the battery pack by the restraining member exceeds the predetermined pressure due to a change in thickness caused by charging and discharging of the battery pack and restraint of the battery pack by the restraining member is released, the FPC severs by a force applied between the plurality of units.

In any of the battery systems described above, the FPC may include a current line and a voltage line that electrically connect the BMS unit and the battery pack. The FPC may include a film portion covering the current line and the voltage line. The film portion may have a severable portion that severs by the force applied between the plurality of units when restraint of the battery pack by the restraining member is released. The shape of the severable portion may be a notch shape. The severable portion may have a perforation shape. The severable portion may be made of a material different from a portion other than the severable portion of the FPC.

According to one embodiment of the present invention, there is provided a flight vehicle including the battery system and a propulsive force generation device that generates a propulsive force by using electric energy stored in the battery system.

The above summary of the invention does not enumerate all necessary features of the present invention. Sub-combinations of these groups of features can also constitute the invention.

### BRIEF DESCRIPTION OF THE DRAWINGS

FIG. 1 schematically illustrates an example of a battery system 10.
FIG. 2 schematically illustrates an example of a restraining member 200.
FIG. 3 schematically illustrates another example of the restraining member 200.
FIG. 4 schematically illustrates an example of a relationship between battery performance and pressure.
FIG. 5 schematically illustrates an example of the battery cell 120.
FIG. 6 schematically illustrates an example of the battery cell 120.
FIG. 7 schematically illustrates an example of the battery system 10.
FIG. 8 schematically illustrates an example of the HAPS 700 in which the battery system 10 is mounted .

### DESCRIPTION OF EXEMPLARY EMBODIMENTS

Hereinafter, the present invention will be described through embodiments of the invention; however, the following embodiments do not limit the invention according to the claims. In addition, not all combinations of the features described in the embodiments are necessarily essential to solution of the invention.

In existing battery packs, it is common that, as constituent members of a case accommodating a battery pack, robust materials such as aluminum and CERP (Carbon Fiber Reinforced Plastics) material are used. However, when such a case is used, there is a problem in ensuring the functionality and safety of the battery pack. Even if the battery pack thickness and an internal pressure excessively increase due to expansion of internal cells derived from charging and discharging, since a robust material is used as a case, it is difficult to stop operation of the battery by controlling pressure. In addition, in order to avoid a risk that failures or accidents such as abnormally high temperature and ignition occur, a mechanism is required that determines deterioration of the cell at an early stage, interrupts an internal current, and stops a function of a battery pack. A battery system 10 according to the present embodiment has, for example, a mechanism that, when the specific pressure is generated inside a battery pack, semi-automatically releases restraint of a cell, changes a pack structure, and interrupts a current.

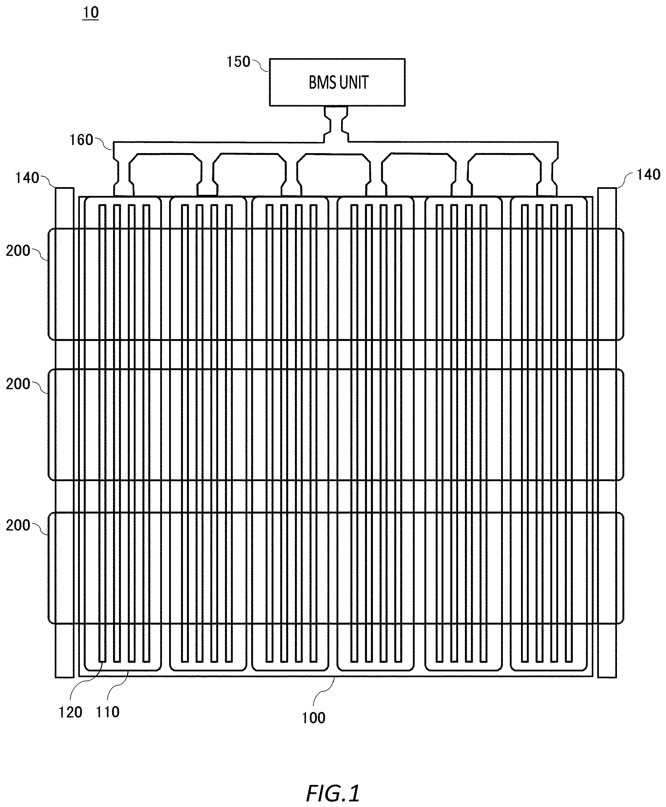

FIG. 1 schematically illustrates an example of the battery system 10. The battery system 10 includes the battery pack 100 and a restraining member 200.

The battery pack 100 is obtained by packing the battery. The battery pack 100 according to the present embodiment has a characteristic in which the thickness changes due to charging and discharging, performance improves as applied pressure increases up to a specific pressure, and performance decreases when a pressure stronger than the specific pressure is applied. The battery pack 100 includes one or a plurality of batteries.

In the example illustrated in FIG. 1, the battery pack 100 includes a plurality of units 110, and each of the plurality of units 110 includes a plurality of battery cells 120. The battery pack 100 may include one unit 110 without including the plurality of units 110. Each of the plurality of units 110 may include one battery cell 120 without including the plurality of battery cells 120.

The battery pack 100 may be any type of battery as long as the battery pack 100 has a characteristic in which the thickness changes due to charging and discharging, performance improves as applied pressure increases up to a specific pressure, and performance decreases when a pressure stronger than the specific pressure is applied. For example, the battery pack 100 is the lithium metal battery.

The restraining member 200 restrains the battery pack 100. In the example illustrated in FIG. 1, the restraining member 200 restrains the battery pack 100 via two plate-shaped members 140 that sandwich the battery pack 100 along the thickness direction. The restraining member 200 may directly restrain the battery pack 100 without the plate-shaped members 140.

In FIG. 1, an example is illustrated in which the battery system 10 includes three restraining members 200 and the respective restraining members 200 are arranged at intervals, but a number and arrangement of the restraining members 200 are not limited thereto. For example, the battery system 10 may include one or two restraining members 200, or may include four or more restraining members 200. When the battery system 10 includes a plurality of restraining members 200, the arrangement intervals of the plurality of restraining members 200 may be equal. The arrangement intervals of the plurality of restraining members 200 may be unequal. The plurality of restraining members 200 may be arranged without the interval.

When the battery pack 100 is repeatedly charged and discharged, the thickness of the battery pack 100 gradually increases, and therefore, when charging and discharging of the battery pack 100 are repeatedly performed in a state in which the battery pack 100 is restrained by the restraining member 200, the internal pressure of the battery pack 100 increases. The restraining member 200 is configured to break when the pressure applied to the battery pack 100 due to a change in thickness caused by charging and discharging of the battery pack 100 exceeds a predetermined pressure, so that restraint of the battery pack 100 is released. This makes it possible to prevent the internal pressure of the battery pack from becoming excessive. Consequently, it becomes possible to prevent, in advance, the short circuit of the battery pack 100 and ignition or the like associated therewith.

By the restraining member 200 restraining the battery pack 100 via the two plate-shaped members 140, the force by which the restraining member 200 restrains the battery pack 100 can be applied more uniformly to the battery pack 100. Therefore, as compared with a case where the plate-shaped member 140 is not provided, it is possible to suppress local deformation of the battery pack 100 and failure of the battery pack 100 and decrease in performance associated therewith. In a case where the plate-shaped member 140 is not provided, as compared with a case where the plate-shaped member 140 is provided, the possibility that local deformation of the battery pack 100 and failure and decrease in performance associated therewith of the battery pack 100 occur increases; however, depending on the configuration of the battery pack 100 and the like, there is also a case where such a possibility does not increase very much, and there is an advantage that the overall weight of the battery pack 100 can be reduced.

The plate-shaped member 140 may be made of any material as long as the plate-shaped member 140 has a relatively smooth surface capable of uniformly contacting the battery pack 100 and is made of the material having relatively high rigidity. The plate-shaped member 140 may be, for example, the metal, and the metal may be, for example, iron or aluminum. As another example, the plate-shaped member 140 may be the reinforced plastic, and the reinforced plastic may be, for example, FRP (Fiber Reinforced Plastics). Accordingly, it is possible to improve weight energy density of the battery system 10 because it is possible to suppress the total weight of the battery system 10 while ensuring strength and rigidity of the plate-shaped member 140.

The interference material such as rubber may be disposed between the plate-shaped member 140 and the battery pack 100. For example, the plate-shaped rubber material may be disposed on a surface side of the plate-shaped member 140 that is in contact with the battery pack 100.

The battery system 10 may include a BMS unit 150 and the FPC 160. The BMS unit 150 is the system that performs safety control of the battery pack 100. For example, the BMS unit 150 monitors the voltage value and the current value of the battery pack 100, and stops charging and discharging of the battery pack 100 when an abnormality is detected. The BMS unit 150 may monitor the voltage value and the current value during charging and discharging for each of one or a plurality of units included in the battery pack 100, and may determine presence or absence of an abnormality based on the voltage value and/or the current value of each unit. The BMS unit 150 may determine presence or absence of an abnormality based on the amount of change per unit time in the voltage value of each unit 110 and/or the amount of change per unit time in the current value of each unit. The BMS unit 150 may stop charging and discharging of the entire battery system 10 when the BMS unit 150 determines that there is the abnormality in each unit. The BMS unit 150 may stop charging and discharging for each unit 110 included in the battery system 10 when the BMS unit 150 determines that there is the abnormality in each unit.

The FPC 160 includes electrical wiring that electrically connects the battery pack 100 and the BMS unit 150. The FPC 160 includes the voltage line that connects a voltage output of the battery pack 100 to a voltage input of the BMS unit 150, and includes the current line that connects a current output of the battery pack 100 to a current input of the BMS unit 150. The FPC 160 may include the electronic component such as an IC chip, and may include electrical wiring other than the voltage line and the current line. When the battery pack 100 includes a plurality of units 110, the FPC may include electrical wiring that electrically connects each of the units 110 and the BMS unit 150.

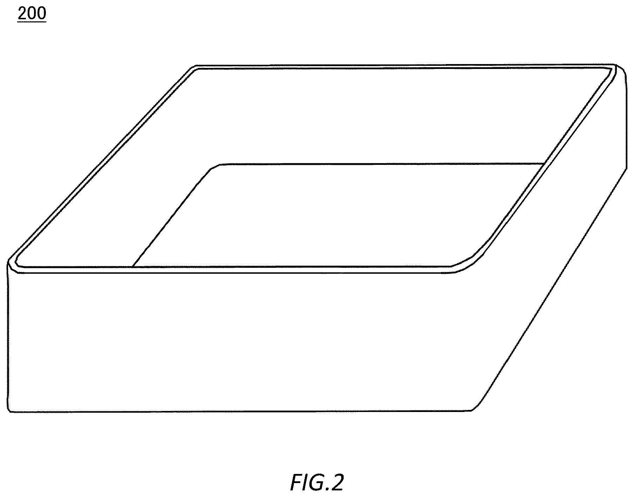

FIG. 2 schematically illustrates an example of the restraining member 200. The restraining member 200 may have any configuration as long as the restraining member 200 is configured to be torn when the pressure applied to the battery pack 100 by the restraining member 200 exceeds a predetermined pressure. The restraining member 200 exemplified in FIG. 2 is annular, and is torn when the pressure applied to the battery pack 100 by the restraining member 200 exceeds a predetermined pressure. The material, width, and thickness of the restraining member 200 are selected such that the restraining member 200 is torn when the pressure applied to the battery pack 100 by the restraining member 200 exceeds a predetermined pressure. The material of the restraining member 200 may be, for example, the organic fiber. The organic fiber may be, for example, polyester fiber, nylon fiber, rayon fiber, polyketone fiber, polyamide fiber, or the like. By using the organic fiber as the material of the restraining member 200, it is possible, while ensuring the strength and rigidity of the restraining member 200, to suppress the total weight of the battery system 10 as compared with a case where a metal is used, and thus the weight energy density of the battery system 10 can be improved. The polyamide fiber may be, for example, the aramid fiber. By using the aramid fiber as the material of the restraining member 200, it is possible, while ensuring higher strength and rigidity of the restraining member 200, to suppress the total weight of the battery system 10 as compared with a case where a metal is used and a case where another organic fiber is used, and thus the weight energy density of the battery system 10 can be further improved.

The breaking strength of the restraining member 200 can be adjusted so as to have a configuration in which the restraining member 200 is torn when the pressure applied to the battery pack 100 exceeds a predetermined pressure. For example, the force received by the restraining member 200 from the battery pack 100 is calculated from the predetermined pressure and the area of the surface where the restraining member 200 and the battery pack 100 are in contact, and based on this force, a number of restraining members 200 to be attached to the battery pack 100 and the breaking strength per restraining member 200 are adjusted.

The breaking strength per restraining member 200 can be adjusted by increasing or decreasing the cross-sectional area of the cross section intersecting the circumferential direction of the restraining member 200, and/or by increasing or decreasing breaking strength (breaking stress) per cross section intersecting the circumferential direction of the restraining member 200. In the present embodiment, description will be given mainly by taking a case where the material of the restraining member 200 is an organic fiber. For example, the cross-sectional area of the cross section intersecting the circumferential direction of the restraining member 200 can be adjusted by increasing or decreasing a number of windings of the organic fiber. For example, the breaking stress of the restraining member 200 can be adjusted by changing the breaking stress of the organic fiber. For example, the breaking stress of the organic fiber can be changed by the type and the composition of the organic fiber to be selected, and post-processing such as bending processing to the organic fiber and aging.

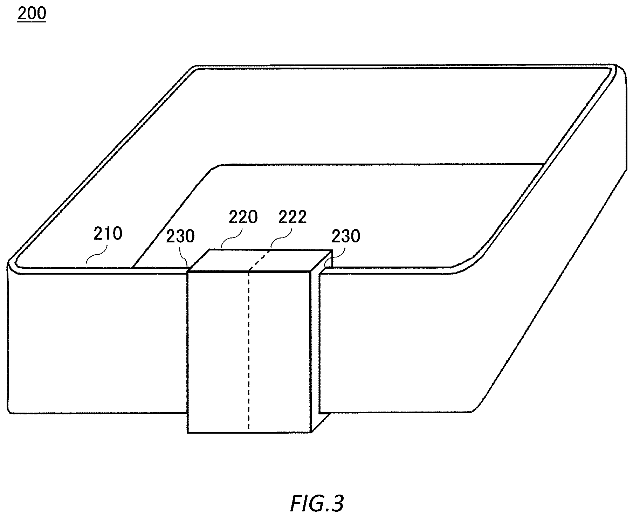

FIG. 3 schematically illustrates another example of the restraining member 200. In the example illustrated in FIG. 3, unlike the example illustrated in FIG. 2, the restraining member 200 includes the band portion 210 that is wound around the battery pack 100, and the fixing portion 220 that fixes different positions of the band portion 210 to each other. In a case where pressure applied to the battery pack 100 by the restraining member 200 exceeds a predetermined pressure, fixing of the restraining member 200 by the fixing portion is released. The structure, shape, and material of the fixing portion 220 may be any structure, shape, and material as long as, in the case where pressure applied to the battery pack 100 by the restraining member 200 exceeds a predetermined pressure, fixing by the fixing portion 220 is released. For example, the structure and shape of the fixing portion 220 may be a structure and shape imitating the structure and shape of the buckle of a general belt. For example, the material of the fixing portion 220 may be the metal, but is not limited thereto. For example, the material of the fixing portion 220 may be non-metal, and may be plastic having relatively high strength, for example, the FRP or the like.

The structure, shape, and material of the band portion 210 may be common to the structure, shape, and material of the restraining member 200 in the example illustrated in FIG. 2, except for the connecting portion 230 between the band portion 210 and the fixing portion 220. Description thereof is omitted.

For example, when the pressure applied to the battery pack 100 by the restraining member 200 exceeds a predetermined pressure, fixing by the fixing portion 220 may be released due to internal breakage of the fixing portion 220 in the restraining member 200, but the present disclosure is not limited thereto. As another example, fixing by the fixing portion 220 may be released due to breakage of any of the connecting portions 230 between the band portion 210 and the fixing portion 220 in the restraining member 200. By configuring the restraining member 200 to include the band portion 210 and the fixing portion 220, work of attaching the restraining member 200 to the battery pack 100 is simplified, adjustment of the severing strength of the restraining member 200 is facilitated, and improvement in accuracy of adjustment of the severing strength can be expected.

In the example illustrated in FIG. 3, for example, the fixing portion 220 may be broken at the coupling portion 222. The coupling portion 222 may be formed of, for example, a different material having lower strength than other portions of the fixing portion 220. As another example, the coupling portion 222 may be formed of, for example, the same material as other portions of the fixing portion 220, and the cross-sectional area of the cross section intersecting the circumferential direction of the fixing portion 220 may be formed smaller than that of other portions of the fixing portion 220. By adopting a configuration in which the fixing portion 220 has the coupling portion 222, adjustment of the severing strength of the restraining member 200 is facilitated, and improvement in accuracy of adjustment of the severing strength can be expected.

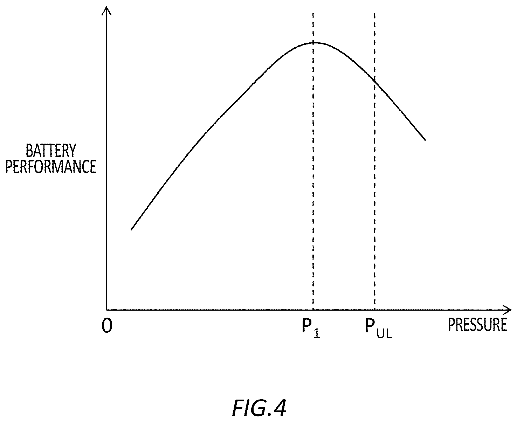

FIG. 4 schematically illustrates an example of the relationship between the pressure applied to the battery pack 100 and battery performance of the battery pack 100. In the graph of FIG. 4, the vertical axis indicates battery performance of the battery pack 100, and the horizontal axis indicates a restraining pressure of the battery pack 100. The battery performance may be an index that can be acquired, for example, by performing various tests of the battery pack 100, for example, the cycle test and the storage test, and analyzing obtained results. For example, the cycle life of the battery pack 100 that can be acquired from a cycle test of the battery pack 100 may be an example of the battery performance of the battery pack 100. When performing the cycle test of the battery pack 100, under specific conditions, while repeatedly charging and discharging the battery pack 100, the voltage value and the current value of the battery pack 100 are measured, and, from the obtained voltage value and current value, a capacity retention rate and a coulombic efficiency, etc. of the battery pack 100 are calculated. As charging and discharging are repeated, indices such as the capacity retention rate, the coulombic efficiency, etc. of the battery pack 100 gradually decrease. A number of charge and discharge cycles at which any or a plurality of indices among indices such as the capacity retention rate, the coulombic efficiency, etc. fall below a preset threshold may be defined as the cycle life [number of times] of the battery.

For example, by performing a cycle test of the battery with the pressure condition for restraining the battery pack 100 changed, a relationship between battery performance and pressure as illustrated in FIG. 4 can be acquired. In the example illustrated in FIG. 4, when the applied pressure is up to the peak pressure P₁, the greater the applied pressure is, the more the battery performance improves. When the pressure greater than the peak pressure P₁ is applied, the battery performance decreases. The pressure at which the restraining member 200 breaks may be the pressure determined based on the peak pressure P₁. Thus, until the battery performance of the battery pack 100 falls below a predetermined criterion with an increase in the restraining pressure, the battery pack 100 can be effectively used, and restraint of the battery pack 100 can be released before the battery performance falls below the predetermined criterion, thereby making it possible to prevent in advance the short circuit of the battery pack 100 and ignition and the like associated therewith. For example, the pressure at which the restraining member 200 breaks may be the upper limit pressure P_{UL} that is a pressure obtained by multiplying the peak pressure P₁ by a ratio R₁ greater than 1. Thus, even after the battery performance of the battery pack 100 falls from the peak with an increase in the restraining pressure, it is possible to prevent in advance the short circuit of the battery pack 100 and ignition and the like associated therewith, while effectively using the battery pack under practical pressure conditions in which the battery pack 100 can be effectively used. The pressure at which the restraining member 200 breaks may be the peak pressure P₁.

The peak pressure P₁ may be an example of the first pressure. The upper limit pressure P_{UL} may be an example of the predetermined pressure at which the restraining member 200 breaks. The ratio R₁ may be an example of the predetermined ratio. The ratio R₁ may be any ratio greater than 1. The ratio R₁ may be 1.1, 1.2, 1.3, 1.4, 1.5, or the like.

A test for obtaining a relationship between battery performance and pressure can be performed, for example, using an apparatus capable of pressing the battery pack 100 with a variable load along a thickness direction of the battery pack 100 and measuring the load during pressing by means such as the load cell. By dividing the measured load by an area where the battery pack and the flat plate are in contact, a pressure applied to the battery pack 100, that is, a restraining pressure of the battery pack 100, can be obtained. By performing the above-described cycle test using such an apparatus, a relationship between battery performance and pressure as illustrated in FIG. 4 can be obtained. The first pressure and the predetermined ratio greater than 1 may depend on various factors such as the type, the structure, the size, the environmental condition, and the operating condition of the battery pack. Therefore, it is desirable to specify those for each target battery pack and each environmental condition and operating condition, by the above-described test and/or various simulation techniques.

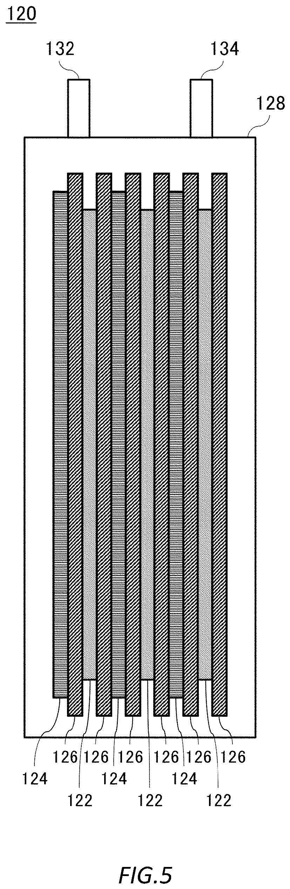

FIG. 5 schematically illustrates an example of the battery cell 120. In FIG. 5, the structure of the battery cell 120 in a state in which the battery pack 100 is restrained by the restraining member 200 will be described. The battery cell 120 includes a plurality of positive electrodes 122, a plurality of negative electrodes 124, and a plurality of separators 126 that are alternately stacked. The battery cell 120 includes the bag-shaped member 128 enclosing the plurality of positive electrodes 122, the plurality of negative electrodes 124, and the plurality of separators 126. The battery cell 120 may include the positive electrode lead 132 that outputs current from the battery cell 120, and the negative electrode lead 134 that outputs electrons from the battery cell 120. The battery cell 120 includes electrolyte.

The electrical connection between the plurality of positive electrodes 122 and the positive electrode lead 132 may be such that each positive electrode 122 and the positive electrode lead 132 are connected in parallel, or may be other connections, and is not limited. The electrical connection between the plurality of negative electrodes 124 and the negative electrode lead 134 may be such that each negative electrode 124 and the negative electrode lead 134 are connected in parallel, or may be other connections, and is not limited. For example, the plurality of positive electrodes 122 and the plurality of negative electrodes 124 alternately stacked in the battery cell 120 may be alternately connected in series, the positive electrode 122 at one end of the series structure may be connected to the positive electrode lead 132, and the negative electrode 124 at the end on the opposite side of the series structure may be connected to the negative electrode lead 134.

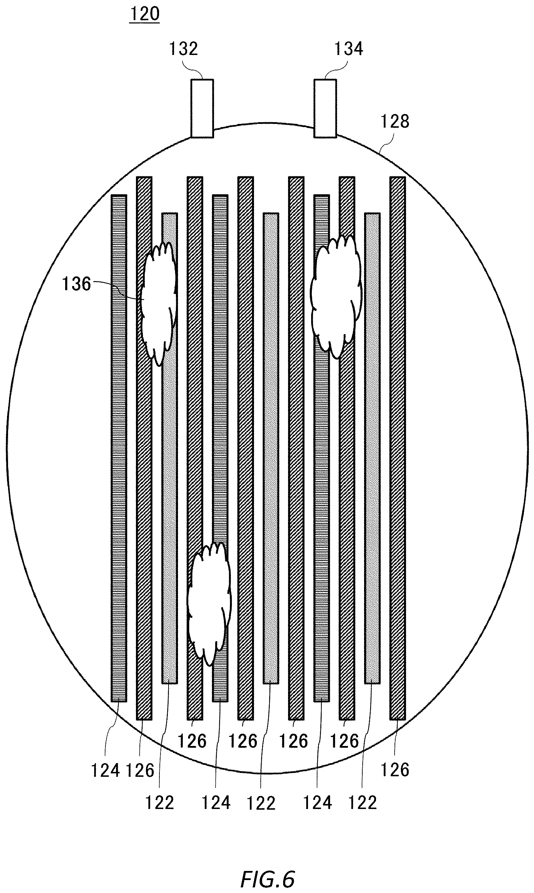

FIG. 6 schematically illustrates an example of the battery cell 120. In the example illustrated in FIG. 6, a state of the battery cell 120 after the restraining member 200 breaks and restraint of the battery pack 100 is released is described, due to pressure applied to the battery pack 100 by the restraining member 200 exceeding a predetermined pressure as a result of a change in thickness caused by charging and discharging of the battery pack 100. Each configuration of the battery cell 120 is common to the example illustrated in FIG. 5. Description thereof is omitted.

Once the restraining member 200 breaks and restraint of the battery pack 100 is released, it is conceivable that, due to generation of the gas 136 or the like associated with subsequent charging and discharging, the stacking of the plurality of positive electrodes 122, the plurality of negative electrodes 124, and the plurality of separators 126 becomes more likely to be released. In this case, contact between the electrodes and the electrolyte is inhibited, thereby making it difficult to secure the ion conduction path, and charging and discharging of the battery cell 120 is likely to stop. In the example illustrated in FIG. 6, the bag-shaped member 128 has the size that allows a stack of the plurality of positive electrodes 122, the plurality of negative electrodes 124, and the plurality of separators 126 to be released and to be separated from each other. Accordingly, after the restraining member 200 breaks and restraint of the battery pack 100 is released, the stack of the plurality of positive electrodes 122, the plurality of negative electrodes 124, and the plurality of separators 126 is likely to be released, and charging and discharging of the battery cell 120 can be stopped more reliably.

The material and structure of the bag-shaped member 128 may be any material and structure as long as the bag-shaped member 128 has the above-described size. As one example, the bag-shaped member 128 may have the pouch structure made of an aluminum laminate.

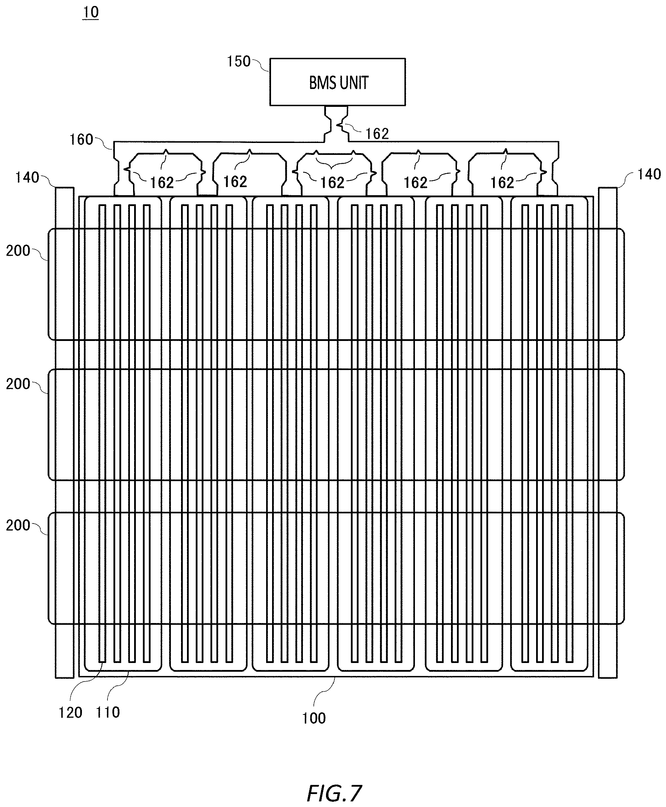

FIG. 7 schematically illustrates an example of the battery system 10. In the example illustrated in FIG. 7, the battery pack 100 includes a plurality of units 110 arranged side by side in a thickness direction, and each of the plurality of units 110 includes a plurality of battery cells 120. The battery system 10 includes the BMS unit 150 and the FPC 160 connected to the BMS unit 150. Each of the plurality of units 110 is connected to the FPC 160. The FPC 160 has a configuration in which, when the pressure applied to the battery pack 100 by the restraining member 200 exceeds a predetermined pressure due to a change in thickness caused by charging and discharging of the battery pack 100 and restraint of the battery pack 100 by the restraining member 200 is released, the FPC 160 severs by the force applied between the plurality of units 110. Accordingly, after the restraining member 200 breaks and restraint of the battery pack 100 is released, charging and discharging of the battery cell 120 can be stopped more reliably.

In the battery system 10, a plurality of adjacent units 110 are in contact with each other, the force of pushing each other acts, and a sum of this force and a force by which the restraining member 200 restrains the battery pack 100 are balanced. The thickness, shape, material, and the like of the FPC 160 are appropriately adjusted such that by releasing restraint of the battery pack 100 by the restraining member 200, the force of the plurality of adjacent units 110 contacting each other and pushing each other is released, and the FPC 160 severs by this force. Accordingly, after the restraining member 200 breaks and restraint of the battery pack 100 is released, charging and discharging of the battery cell 120 can be stopped more reliably.

When the restraining member 200 breaks and restraint of the battery pack 100 is released, the thickness of the unit 110 increases due to generation of gas and the like accompanying subsequent charging and discharging. Accordingly, the force acts such that a plurality of adjacent units 110 contact each other and push each other. The thickness, shape, material, and the like of the FPC 160 may be appropriately adjusted such that the FPC 160 severs by this force. Accordingly, after the restraining member 200 breaks and restraint of the battery pack 100 is released, charging and discharging of the battery cell 120 can be stopped more reliably.

As another example, the battery system 10 may further include the configuration that acts directly on the FPC 160 in conjunction with breakage of the restraining member 200 to sever the FPC. Accordingly, after the restraining member 200 breaks and restraint of the battery pack 100 is released, charging and discharging of the battery cell 120 can be stopped more reliably.

The FPC 160 may include the current line and the voltage line that electrically connect the BMS unit 150 and the battery pack 100, and a film portion that covers the current line and the voltage line. The film portion may have a severable portion 162 that severs due to the force applied between the plurality of units 110 when restraint of the battery pack 100 by the restraining member 200 is released. The position and shape of the severable portion 162 on the FPC 160 may be any position on the FPC 160 and may be any shape, as long as the severable portion 162 is configured such that the FPC 160 severs due to the force applied between the plurality of units 110 when restraint of the battery pack 100 by the restraining member 200 is released. As an example, as in the example illustrated in FIG. 7, the position of the severable portion 162 on the FPC 160 may be the position near the base of each unit of the FPC 160, the position connecting the units of the FPC 160 to each other, and/or the position near the base of the BMS unit 150 of the FPC 160, but is not limited thereto. As an example, as in the example illustrated in FIG. 7, the shape of the severable portion 162 may be the notch shape. The direction of the notch may be the lateral direction of the FPC 160 as illustrated in FIG. 7, but may be the thickness direction of the FPC 160. The shape of the severable portion 162 is not limited to the notch shape. As another example, for example, the severable portion 162 may have the perforation shape. Only the severable portion 162 may be made of a different material. Accordingly, in the FPC 160, functions of the portion that severs when receiving a predetermined force and the portion that does not sever are separated, and while ensuring functions of durability and electrical conductivity of the FPC 160, after the restraining member 200 breaks and restraint of the battery pack 100 is released, charging and discharging of the battery cell 120 can be stopped more reliably.

The plurality of units 110 of the battery pack 100 may be connected to the BMS unit 150 in parallel with each other by the FPC 160. In the example illustrated in FIG. 7, for example, the FPC is torn at the severable portion 162, among the plurality of severable portions 162, at a position near the base of one unit 110 among the plurality of units 110. In this case, the current line of the one unit 110 is cut, and charging and discharging of the one unit may be stopped. The BMS unit 150 may stop charging and discharging of other units 110 other than the one unit based on a change in the current value of the one unit 110. This makes it possible to more reliably prevent, in advance, the short circuit of the battery pack 100 and ignition or the like associated therewith. The BMS unit 150 may stop charging and discharging of only the one unit 110 while continuing charging and discharging of other units 110 other than the one unit 110. This makes it possible to keep, in the battery system 10, charge and discharge capability of other units 110 for which an abnormality has not been confirmed in an available state, and to stop only the unit 110 for which an abnormality has been confirmed while minimizing an influence on the remaining power amount, thereby making it possible to more reliably prevent, in advance, the short circuit of the unit 110 and ignition or the like associated therewith.

In a similar case, when the voltage line of the one unit 110 is cut, the BMS unit 150 may stop charging and discharging of the one unit based on a change in the voltage value of the one unit 110, and may stop charging and discharging of other units 110 other than the one unit 110. This makes it possible to more reliably prevent, in advance, the short circuit of the battery pack 100 and ignition or the like associated therewith. The BMS unit 150 may stop charging and discharging of only the one unit 110 while continuing charging and discharging of other units 110 other than the one unit 110. This makes it possible to keep, in the battery system 10, charge and discharge capability of other units 110 for which an abnormality has not been confirmed in an available state, and to stop only the unit 110 for which an abnormality has been confirmed while minimizing an influence on the remaining power amount, thereby making it possible to more reliably prevent, in advance, the short circuit of the unit 110 and ignition or the like associated therewith.

All of the plurality of units 110 of the battery pack 100 may be connected in series by the FPC 160 and connected to the BMS unit 150. In the example illustrated in FIG. 7, for example, the FPC 160 is torn at any of the plurality of severable portions 162. In this case, the current line in the vicinity of the severable portion 162 is cut off, and charging and discharging of all of the plurality of units 110 in the same battery system 10 are stopped. This causes the battery system 10 to stop without intervention by the BMS unit 150, and thus, for example, even when a failure occurs in the abnormality detection function or the like of the BMS unit 150, it becomes possible to more reliably prevent, in advance, the short circuit of the battery system 10 and ignition or the like associated therewith without relying on electronic control by these functions.

In a similar case, when the voltage line in the vicinity of the severable portion 162 is cut off, the BMS unit 150 may stop charging and discharging of all of the plurality of units 110 in the same battery system 10 based on a change in the voltage value of the battery pack 100. Charging and discharging of the other units 110 other than the one unit 110 may be stopped. This makes it possible to more reliably prevent, in advance, the short circuit of the battery pack 100 and ignition or the like associated therewith.

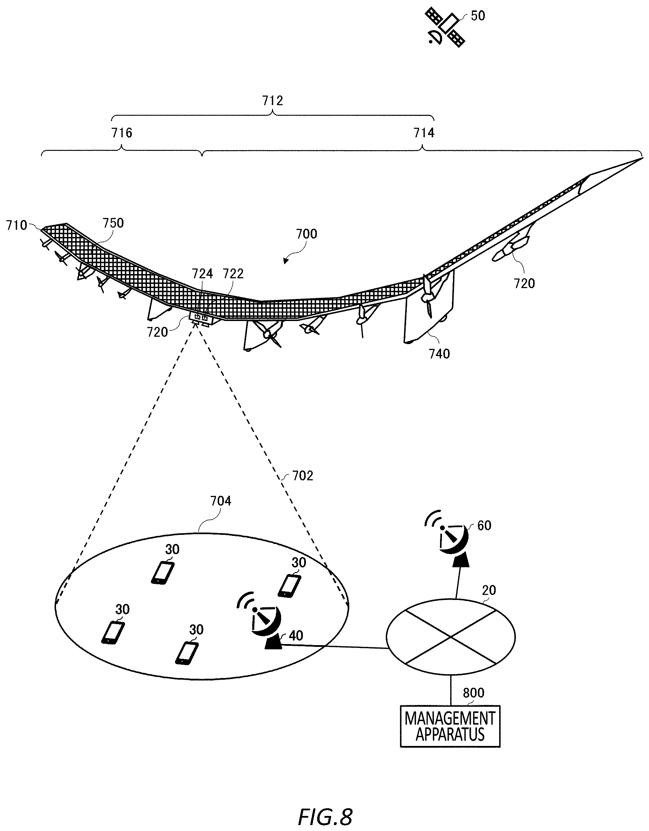

FIG. 8 schematically illustrates an example of a HAPS 700 in which the battery system 10 is mounted. The HAPS 700 is a flight vehicle that provides a wireless communication service to a user terminal 30 in a communication area 704 that is formed by emitting a beam 702 toward the ground. The HAPS 700 may be an example of a flight vehicle which includes the battery system 10 and a propulsive force generation device which utilizes electric energy accumulated in the battery system 10 to generate propulsive force.

The HAPS 700 includes an aircraft body 710, a central portion 720, a propeller 730, a pod 740, and a solar battery panel 750. The aircraft body 710 has a wing portion 712. The wing portion 712 includes a left wing portion 714 and a right wing portion 716.

The battery system 10 is arranged, for example, inside the wing portion 712. The electric energy accumulated in the battery system 10 is utilized by each component included in the HAPS 700. For example, the electric energy accumulated in the battery system 10 is utilized by a motor of the propeller 730 which generate the propulsive force. As one specific example, a plurality of battery systems 10, which are connected in parallel, are arranged inside the wing portion 712. Among the plurality of battery systems 10, a plurality of battery systems 10 on a left side may be arranged in the left wing portion 714, and a plurality of battery systems 10 on a right side may be arranged in the right wing portion 716. Electric power discharged by the plurality of battery systems 10 is utilized by each component included in the HAPS 700. For example, the electric power discharged by the plurality of battery systems 10 is utilized by the motor of the propeller 730.

A flight control unit 722 and a communication control unit 724 are arranged in the central portion 720. The flight control unit 722 uses the electric power discharged by the plurality of battery systems 10 to control flight of the HAPS 700. The communication control unit 724 uses the electric power discharged by the plurality of battery systems 10 to control communication of the HAPS 700.

The flight control unit 722 controls the flight of the HAPS 700 by controlling the rotation of the propeller 730, for example. Also, the flight control unit 722 may control the flight of the HAPS 700 by changing the angle of a flap or an elevator that are not shown. The flight control unit 722 may include various types of sensors such as a positioning sensor such as a GPS sensor, a gyro sensor, and an acceleration sensor to manage a position, a movement direction, and a movement speed of the HAPS 700.

The communication control unit 724 forms the communication area 704 on the ground by using an SL (Service Link) antenna. The communication control unit 724 forms a service link between the user terminal 30 on the ground by using the SL antenna. The SL antenna may be a multi-beam antenna. The communication area 704 may be a multi-cell.

The communication control unit 724 may form a feeder link between a gateway 40 on the ground by using an FL (Feeder Link) antenna. The communication control unit 724 may access a network 20 via the gateway 40.

The communication control unit 724 may communicate with a communication satellite 50 by using a satellite communication antenna. The communication control unit 724 may access the network 20 via the communication satellite 50 and a satellite communication station 60.

The user terminal 30 may be any communication terminal as long as it can communicate with the HAPS 700. For example, the user terminal 30 is a mobile phone such as a smartphone. The user terminal 30 may be a tablet terminal, a PC (Personal Computer), and the like. The user terminal 30 may also be a so-called IoT, or Internet of Thing, device. The user terminal 30 may include anything which corresponds to a so-called IoE, or Internet of Everything.

The HAPS 700 relays a communication between the network 20 and the user terminal 30, for example, via the feeder link or the communication satellite 50, and the service link. The HAPS 700 may provide a wireless communication service to the user terminal 30 by relaying the communication between the user terminal 30 and the network 20.

The network 20 includes a mobile communication network. The mobile communication network may conform to any of a long term evolution (LTE) communication standard, a 5th generation (5G) communication standard, a 3rd generation (3G) communication standard, or a communication standard after a 6th generation (6G) communication standard. The network 20 may include the Internet.

For example, the HAPS 700 transmits data received from the user terminal 30 in the communication area 704 to the network 20. In addition, for example, when the HAPS 700 receives data addressed to the user terminal 30 in the communication area 704, via the network 20, the HAPS 700 transmits the data to the user terminal 30.

The HAPS 700 maintains the communication area 704 in a specific area on the ground while circulating a predetermined flight path in the stratosphere, for example. The HAPS 700 stores the electric power generated by the solar battery panel 750 during daytime in the plurality of battery systems 10 and uses the electric power of the plurality of battery systems 10 during nighttime to maintain the flight in the stratosphere. For example, during the daytime, the HAPS 700 charges the plurality of battery systems 10 while ascending to store potential energy, and during the nighttime, it uses the electric power in the battery system 10 as appropriate to operate the propeller 730 and the like while gradually descending, thereby maintaining the flight in the stratosphere.

The management apparatus 800 manages a plurality of the HAPS 700. The management apparatus 800 may communicate with the HAPS 700 via the network 20 and the gateway 40. The management apparatus 800 may communicate with the HAPS 700 via the network 20, the satellite communication station 60, and the communication satellite 50.

The management apparatus 800 controls the HAPS 700 by transmitting a directive. The management apparatus 800 may cause the HAPS 700 to circle over a target area such that the target area on the ground is covered by the communication area 704. For example, the HAPS 700 maintains the feeder link with the gateway 40 by adjusting a pointing direction of the FL antenna while flying in a circular orbit over the target area, and maintains the coverage of the target area by the communication area 704 by adjusting a pointing direction of the SL antenna.

While the present invention has been described by way of the embodiments, the technical scope of the present invention is not limited to the above-described embodiments. It is apparent to persons skilled in the art that various alterations or improvements can be added to the above-described embodiments. It is also apparent from the described scope of the claims that the embodiments added with such alterations or improvements can be included in the technical scope of the present invention.

It should be noted that the operations, procedures, steps, stages or the like of each process performed by an apparatus, system, program, and method shown in the scope of the claims, embodiments, or diagrams can be performed in any order as long as the order is not indicated by "prior to," "before," or the like and as long as the output from a previous process is not used in a later process. Even if the process flow is described by using phrases such as "first", "then" or the like in the scope of the claims, embodiments, or diagrams, it does not necessarily mean that the process must be performed in this order.

### EXPLANATION OF REFERENCES

10 battery system, 20 network, 30 user terminal, 40 gateway, 50 communication satellite, 60 satellite communication station, 100 battery pack, 110 unit, 120 battery cell, 122 positive electrode, 124 negative electrode, 126 separator, 128 bag-shaped member, 132 positive electrode lead, 134 negative electrode lead, 136 gas, 140 plate-shaped member, 150 BMS unit, 160 FPC, 162 severable portion, 200 restraining member, 210 band portion, 220 fixing portion, 222 coupling portion, 230 connecting portion, 700 HAPS, 702 beam, 704 communication area, 710 aircraft body, 712 wing portion, 714 left wing portion, 716 right wing portion, 720 central portion, 722 flight control unit, 724 communication control unit, 730 propeller, 740 pod, 750 solar battery panel, 800 management apparatus.

## Claims

1. A battery system comprising:
a battery pack whose thickness changes due to charging and discharging; and
a restraining member that restrains the battery pack, the restraining member having a configuration in which, when a pressure applied to the battery pack by the restraining member due to a change in thickness of the battery pack caused by charging and discharging exceeds a predetermined pressure, the restraining member breaks and restraint of the battery pack is released.

2. The battery system according to claim 1, wherein the restraining member restrains the battery pack via two plate-shaped members that sandwich the battery pack along a direction of the thickness.

3. The battery system according to claim 1 or 2, wherein the restraining member is annular, and is torn when the pressure applied to the battery pack by the restraining member exceeds the predetermined pressure.

4. The battery system according to claim 3, wherein
the battery pack is a lithium metal battery, and
the restraining member is made of aramid fiber.

5. The battery system according to any one of claims 1 to 4, wherein the restraining member has a band portion that is wound around the battery pack and a fixing portion that fixes different positions of the band portion to each other, and has a configuration in which, when the pressure applied to the battery pack by the restraining member exceeds the predetermined pressure, fixing by the fixing portion is released.

6. The battery system according to any one of claims 1 to 5, wherein
the battery pack has a characteristic in which performance improves as applied pressure increases up to a first pressure and performance decreases when a pressure stronger than the first pressure is applied, and
the predetermined pressure is a pressure determined based on the first pressure.

7. The battery system according to claim 6, wherein the predetermined pressure is a pressure obtained by multiplying the first pressure by a predetermined ratio greater than 1.

8. The battery system according to any one of claims 1 to 7, wherein
the battery pack includes a battery cell,
the battery cell includes
a plurality of positive electrodes, a plurality of negative electrodes, and a plurality of separators that are alternately stacked, and
a bag-shaped member enclosing the plurality of positive electrodes, the plurality of negative electrodes, and the plurality of separators, and
the bag-shaped member has a size that, after the restraining member breaks and restraint of the battery pack is released due to the pressure applied to the battery pack by the restraining member exceeding the predetermined pressure due to a change in thickness of the battery pack caused by charging and discharging, enables stacking of the plurality of positive electrodes, the plurality of negative electrodes, and the plurality of separators to be released and to be separated from each other.

9. The battery system according to any one of claims 1 to 8, wherein
the battery pack has a plurality of units arranged side by side in a direction of the thickness,
each of the plurality of units includes a plurality of battery cells,
the battery system comprises:
a BMS (Buttery Management System) unit; and
FPC (Flexible Printed Circuits) connected to the BMS unit,
each of the plurality of units is connected to the FPC, and
the FPC has a configuration in which, when the pressure applied to the battery pack by the restraining member exceeds the predetermined pressure due to a change in thickness of the battery pack caused by charging and discharging and restraint of the battery pack by the restraining member is released, the FPC severs by a force applied between the plurality of units.

10. The battery system according to claim 9, wherein
the FPC includes
a current line and a voltage line that electrically connect the BMS unit and the battery pack, and
a film portion that covers the current line and the voltage line, and
the film portion has a severable portion that severs due to the force applied between the plurality of units when restraint of the battery pack by the restraining member is released.

11. A flight vehicle comprising:
the battery system according to any one of claims 1 to 10; and
a propulsive force generation device that generates a propulsive force by using electric energy stored in the battery system.
